# EUROPEAN PATENT APPLICATION

(11) **EP 4 733 628 A1**
(43) Date of publication of application: **29.04.2026**
(21) Application number: 25805601.9
(22) Date of filing: 18.03.2025
(51) Int. Cl.: F16H 57/02, F04C 23/02, H01R 13/648

(54) **SEALING STRUCTURE, TRANSMISSION, AND VEHICLE**

(30) Priority: 17.06.2024 CN 202410774692
(71) Applicant: Chery Automobile Co., Ltd., Wuhu, Anhui 241006 (CN); Wuhu Acteco Powertrain Co., Ltd, Wuhu, Anhui 241009 (CN)
(72) Inventor: HAN, Yanyan, Wuhu, Anhui 241006 (CN); WANG, Wei, Wuhu, Anhui 241006 (CN); GAN, Shenglin, Wuhu, Anhui 241006 (CN); ZHOU, Zhiguang, Wuhu, Anhui 241006 (CN); DONG, Qixin, Wuhu, Anhui 241006 (CN)
(74) Representative: Reddie & Grose LLP
(86) International application number: PCT/CN2025/083192
(87) International publication number: WO 2025/260868

(57) **Abstract**

The present disclosure relates to a sealing structure, a gearbox, and an automobile. The sealing structure includes a first housing (1), a controller (2), a second housing (3), a motor (4), and an electrical connector (5), wherein the motor (4) is disposed in the first cavity (101); the controller (2) is disposed in the second cavity (301), the first housing (1) is connected to the second housing (3), one end of the first through hole (102) is disposed opposite one end of the second through hole (302), the motor (4) is electrically connected to the controller (2) via the electrical connector (5), and the electrical connector (5) extends from the first cavity (101) through the first through hole (102) and the second through hole (302) into the second cavity (301), the electrical connector (5) seals the first through hole (102), an annular first sealing surface is formed between the electrical connector (5) and the second housing (3,; and the first sealing surface extends circumferentially around the second through hole (302) towards one end of the first through hole (102). The present disclosure can improve the sealing performance of the motor and the controller.

## Description

This application claims priority to Chinese Patent Application No. 202410774692.9, filed on June 17, 2024 and entitled "SEALING STRUCTURE, GEARBOX, AND AUTOMOBILE," the disclosure of which is incorporated herein by reference in its entirety.

### TECHNICAL FIELD

The present disclosure relates to the field of automobile sealing technologies, and in particular, to a sealing structure, a gearbox, and an automobile.

### BACKGROUND

An automobile is a means of transportation driven by a power source and used for carrying goods. With the development of science and technology, motors are stared to be used as the power sources of the automobiles.

An automobile includes a motor and a controller, and the controller can control operating parameters of the motor, such that a driving state of the automobile can adapt to road conditions.

In the related art, the motor and the controller are generally arranged inside the automobile, and have certain sealing requirements. However, a component of the controller for transmitting an electrical signal needs to be led out and connected to the motor, such that the operating parameters of the motor are controlled. In this way, the motor and the controller are easily contaminated by impurities.

### SUMMARY

In view of this, the present disclosure provides a sealing structure, a gearbox, and an automobile, to improve sealing performance thereof.

Specifically, the technical solutions are as follows.

According to a first aspect of the present disclosure, a sealing structure is provided. The sealing structure includes a first housing, a controller, a second housing, a motor, and an electrical connector, wherein the first housing has a first cavity and a first through hole, and the second housing has a second cavity and a second through hole;
wherein the first housing is connected to the second housing;
one end of the first through hole is disposed opposite one end of the second through hole.
the motor is electrically connected to the controller via the electrical connector, and the electrical connector extends from the first cavity through the first through hole and the second through hole into the second cavity.
the electrical connector seals the first through hole; and
an annular first sealing surface is formed between the electrical connector and the second housing, and the first sealing surface extends circumferentially around the second through hole towards one end of the first through hole;

Optionally, the electrical connector is abutted against a side surface of the first through hole.

Optionally, the sealing structure includes an elastic member, wherein the elastic member is sleeved on the electrical connector and is abutted against both the electrical connector and the side wall of the first through hole.

Optionally, the electrical connector includes a sealing portion, wherein an orthographic projection of the second through hole on a second projection plane is within an orthographic projection of the sealing portion on the second projection plane, the second projection plane is perpendicular to the height direction of the second housing, and the sealing portion is abutted against the second housing and forms the first sealing surface.

Optionally, the sealing structure further includes a plurality of abutment members, wherein the plurality of abutment members are circumferentially disposed at intervals around the second through hole, and each of the plurality of abutment member is connected to the sealing portion and the second housing, such that a pressure perpendicular to the first sealing surface is applied on the sealing portion.

Optionally, the sealing structure further includes a plurality of connectors, wherein the plurality of connectors are circumferentially disposed at intervals around the electrical connector, the first housing is connected to the second housing via the connector, such that a second sealing surface is formed between the first housing and the second housing, and the second sealing surface circumferentially extends around the first sealing surface.

Optionally, the electrical connector includes a first connecting portion, a sealing portion, and a second connecting portion, the sealing portion is connected to the first connecting portion and the second connecting portion, the first connecting portion passes through the first through hole and extends into the first cavity, the second connecting portion passes through the second through hole and extends into the second cavity, and the sealing portion is disposed between the first housing and the second housing.

Optionally, the second housing has a third cavity, the third cavity is communicated with the second cavity, and the second through hole and the third cavity are disposed on two adjacent sides of the second cavity respectively.

According to a second aspect of the present disclosure, a gearbox is provided. The gearbox includes the sealing structure according to the above technical solution.

According to a third aspect of the present disclosure, an automobile is provided. The automobile includes the gearbox according to the above technical solution.

The technical solutions according to the embodiments of the present disclosure achieve at least the following beneficial effects. The first housing accommodates the motor, and the second housing accommodates the motor. The first through hole is opposite the second through hole, the electrical connector can pass through the first through hole and the second through hole, and the motor in the first cavity is electrically connected to the controller in the second cavity via the electrical connector. The electrical connector seals the first through hole, the sealing performance of the first cavity is improved, and contamination to the controller is reduced. The annular first sealing surface is formed between the electrical connector and the second housing, the second through hole is sealed to improve the sealing performance of the second cavity. The first through hole and the second through hole are sealed, the electrical connector has an electrical signal transmitting function and a sealing function, which can also improve the assembly convenience of the sealing structure of the present disclosure.

### BRIEF DESCRIPTION OF DRAWINGS

For clearer descriptions of the technical solutions in the embodiments of the present disclosure, the following briefly describes the accompanying drawings required for describing the embodiments. Apparently, the accompanying drawings in the following description show merely some embodiments of the present disclosure, and other drawings may be derived by those skilled in the art from these accompanying drawings without creative efforts.
FIG. 1 is a schematic full sectional view of a sealing structure according to an embodiment of the present disclosure;
FIG. 2 is a detailed schematic diagram of position A in FIG. 1;
FIG. 3 is a detailed schematic diagram in which an electrical connector and some related structures are removed from position A in FIG. 1;
FIG. 4 is a schematic side view of a sealing structure according to an embodiment of the present disclosure; and
FIG. 5 is a schematic side view of a sealing structure whose cover plate is removed according to an embodiment of the present disclosure.

The symbols in the accompanying drawings are as follows:
1: first housing; 101: first cavity; 102: first through hole; 103: opening;
2: controller;
3: second housing; 301: second cavity; 302: second through hole; 303: third cavity;
4: motor;
5: electrical connector; 51: sealing portion; 52: first connecting portion; 53: second connecting portion;
6: elastic member;
7: abutment member;
8: connector; and
9: cover plate.

The above accompanying drawings have shown specific embodiments of the present disclosure that are to be described in detail as follows. These accompanying drawings and text descriptions are not intended in any way to limit the scope of the concept of the present disclosure, but to illustrate the conception of the present disclosure for those skilled in the art with reference to specific embodiments.

### DETAILED DESCRIPTION

For clearer descriptions of the objectives, technical solutions, and advantages of the present disclosure, embodiments of the present disclosure are described in detail below with reference to the accompanying drawings.

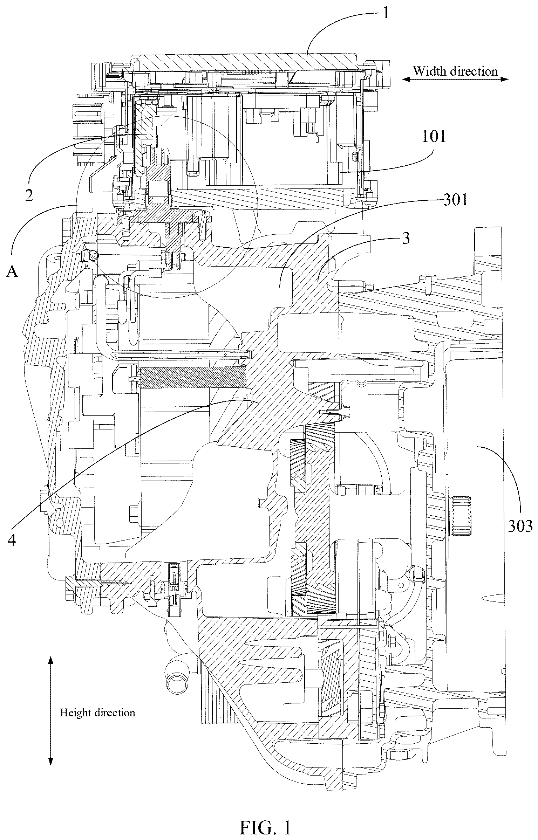

Orientation terms in the embodiments of the present disclosure, such as "upper", "lower", and "side", are generally based on relative relationships of orientations shown in FIG. 1, and these orientation terms are merely used to describe relationships between structures more clearly, but are not intended to describe absolute orientations. When a product is placed in different postures, these orientations may change, for example, "upper" and "lower" may be interchanged.

Unless otherwise defined, all technical terms used in the embodiments of the present disclosure have the same meanings as those generally understood by those of ordinary skill in the art.

For clearer descriptions of the technical solutions and advantages of the present disclosure, the embodiments of the present disclosure are further described in detail hereinafter with reference to the accompanying drawings.

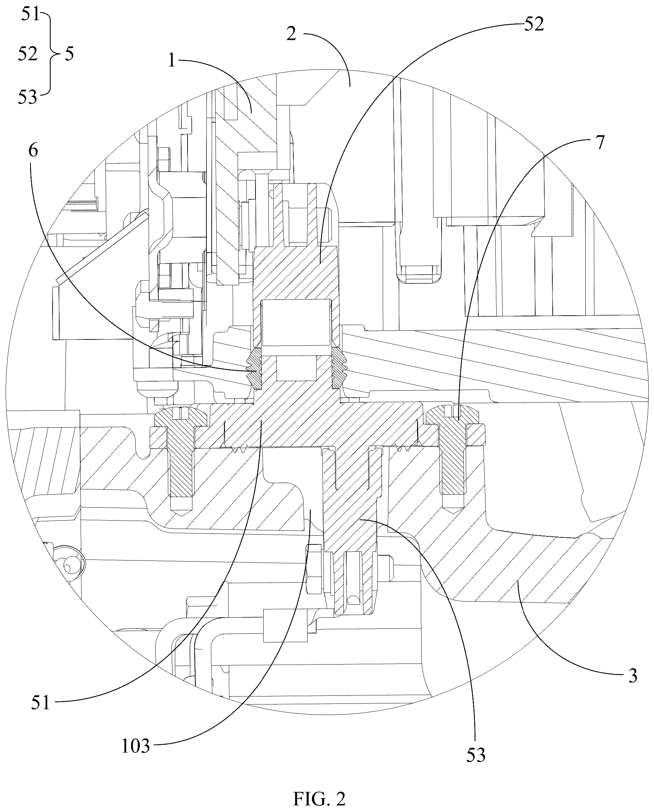

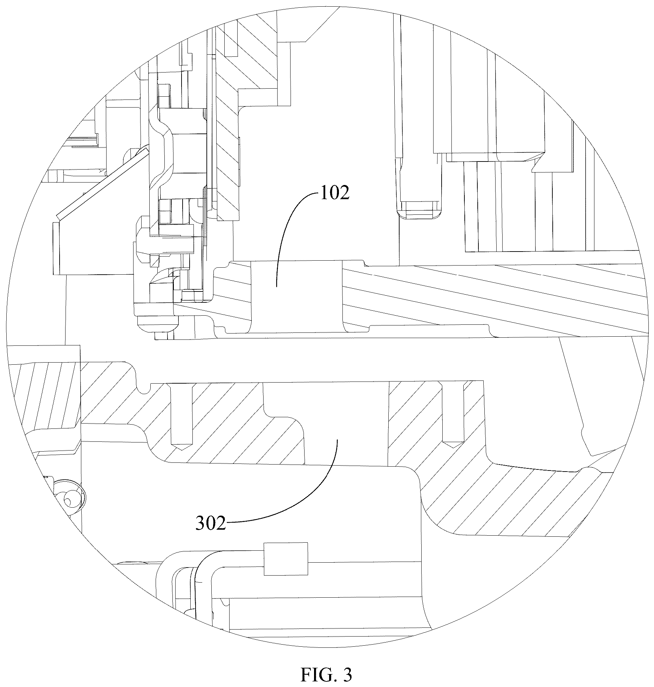

According to a first aspect of the present disclosure, a sealing structure is provided. As shown in FIG. 1, FIG. 2, and FIG. 3, the sealing structure includes a first housing 1, a controller 2, a second housing 3, a motor 4, and an electrical connector 5, wherein the first housing 1 has a first cavity 101 and a first through hole 102, and the second housing 3 has a second cavity 301 and a second through hole 302.

The first housing 1 is connected to the second housing 3.

One end of the first through hole 102 is disposed opposite one end of the second through hole 302.

The motor 4 is electrically connected to the controller 2 via the electrical connector 5, and the electrical connector 5 extends from the first cavity 101 through the first through hole 102 and the second through hole 302 into the second cavity 301.

The electrical connector 5 seals the first through hole 102.

An annular first sealing surface is formed between the electrical connector 5 and the second housing 3, and the first sealing surface extends circumferentially around the second through hole 302 towards one end of the first through hole 102.

It can be understood that the first housing 1 accommodates the motor 4, and the second housing 3 accommodates the motor 4. The first through hole 102 is opposite the second through hole 302, the electrical connector 5 can pass through. The first through hole 102 and the second through hole 302, and the motor 4 in the first cavity 101 is electrically connected to the controller 2 in the second cavity 301. The electrical connector 5 seals the first through hole 102, the sealing performance of the first cavity 101 is improved, and contamination to the controller 2 is reduced. The annular first sealing surface is formed between the electrical connector 5 and the second housing 3, the second through hole 302 can be sealed to improve the sealing performance of the second cavity 301. The first through hole 102 and the second through hole 302 are sealed, the electrical connector 5 has an electrical signal transmitting function and a sealing function, which can also improve the assembly convenience of the sealing structure of the present disclosure.

In the related art, due to the sealing requirements of the motor 4 and controller 2, in the case that the electrical connector 5 passes through a cavity where the motor 4 is disposed and a cavity where the controller 2 is disposed, a position where the electrical connector 5 is disposed needs to be sealed, which increases the assembly cost and time of the sealing structure.

In some embodiments of the present disclosure, because the positions of the first through hole 102 and the second through hole 302 are sealed, the electrical connector 5 has an electrical signal transmitting function and a sealing function, which can also improve the assembly convenience of the sealing structure of the present disclosure. Specifically, during assembly, the electrical connector 5 is first connected to the second housing 3, such that the first sealing surface is formed. The first through hole 102 and the second through hole 302 are opposite each other, in the case that the first housing 1 and the second housing 3 are assembled, the electrical connector 5 is simultaneously penetrated into the first through hole 102, which is beneficial for the electrical connector 5 to seal the first through hole 102. As can be seen from this, the fashion of sealing the first through hole 102 and the second through hole 302 via the electrical connector 5 can be adapted to the assembly process of the sealing structure of the present disclosure. That is, the first through hole 102 and the second through hole 302 are sealed while assembling the electrical connector 5 and the second housing 3 and assembling the first housing 1 and the second housing 3. In this way, the assembly efficiency is improved.

In some embodiments of the present disclosure, as the electrical connector 5 seals the first through hole 102, the sealing performance of the first cavity 101 is improved, and the contamination to the controller 2 is reduced. The electrical connector 5 can block the first through hole 102 based on its own structural characteristic, such that the first electrical connector 5 is sealed. Alternatively, the first through hole 102 is blocked by another sealing element. The electrical connector 5 completely fills the first through hole 102, such that the first electrical connector 5 is sealed. Alternatively, a certain cross section of the first through hole 102 is blocked, such that the first cavity 101 cannot communicate with the outside through the first through hole 102, thereby sealing the first through hole 102.

In some embodiments of the present disclosure, by forming the annular first sealing surface with the second housing 3, the electrical connector 5 seals the second through hole 302, and maintain the effect of sealing the first through hole 102. It is understood that because the first through hole 102 and the second through hole 302 are disposed opposite each other, in the case that the electrical connector 5 forms the annular first sealing surface with the second housing 3, the electrical connector 5 is supported by the second housing 3. Such support can not only improve the stability of the electrical connector 5 extending into the first through hole 102, but also maintain the electrical connector 5 in the first through hole 102, thereby maintaining the sealing effect of the electrical connector 5 on the first through hole 102. Because the annular first sealing surface circumferentially extends around the second through hole 302, impurities can be prevented from entering the second through hole 302 through the first sealing surface. In this way, the effect of sealing the second through hole 302 is achieved. The electrical connector 5 forms the annular first sealing surface by generating a pressure on the second housing 3, or forms the annular first sealing surface by being integrally formed with the second housing 3.

In some embodiments of the present disclosure, the first housing 1 is connected to the second housing 3. The first housing 1 is detachably connected to the second housing 3, for example, by bolt connection, or the first housing 1 is non-detachably connected to the second housing 3.

In some embodiments of the present disclosure, one end of the first through hole 102 is disposed opposite one end of the second through hole 302, the electrical connector 5 can directly pass more conveniently through the first through hole 102 and the second through hole 302opposite to each other, and the length of electrical connection between the motor 4 and the controller 2 is shortened. Moreover, this arrangement also facilitates sealing the first through hole 102 by extending the electrical connector 5 into the first through hole 102 while assembling the first housing 1 and the second housing 3.

In the case that the first through hole 102 and the second through hole 302 extend along straight lines, one end of the first through hole 102 opposite to one end of the second through hole 302 indicates that the extension direction of the first through hole 102 is parallel to or coincides with the extension direction of the second through hole 302. In the case that the first through hole 102 and the second through hole 302 extend along curves, one end of the first through hole 102 opposite to one end of the second through hole 302 indicates that a tangent line at the end of the first through hole 102 is parallel to or coincides with a tangent line at the end of the second through hole 302. In the case that the first through hole 102 extends along a straight line, and the second through hole 302 extends along a curve, one end of the first through hole 102 opposite to one end of the second through hole 302 indicates that the extension direction of the first through hole 102 is parallel to or coincides with a tangent line at the end of the second through hole 302. In the case that the second through hole 302 extends along a straight line, and the first through hole 102 extends along a curve, one end of the second through hole 302 opposite to one end of the first through hole 102 indicates that the extension direction of the second through hole 302 is parallel to or coincides with a tangent line at the end of the first through hole 102.

In some embodiments of the present disclosure, the motor 4 is electrically connected to the controller 2 via the electrical connector 5, and the electrical connector 5 extends from the first cavity 101 through the first through hole 102 and the second through hole 302 into the second cavity 301. The orthographic projection of the portion of the electrical connector 5 disposed in the first cavity 101 on a first projection plane is within an orthographic projection of the first through hole 102 on the first projection plane. In this way, in the case that the first housing 1 and the second housing 3 are assembled, the electrical connector 5 is easy to extend through the first through hole 102 into the first cavity 101, wherein the first projection plane is a plane perpendicular to the height direction of the first housing 1.

In some embodiments of the present disclosure, the controller 2 is an MCU (Motor Control Unit, a control unit of the motor 4), and can control parameters, such as the rotational speed of the motor 4, through the electrical connector 5.

In some embodiments of the present disclosure, a material of the electrical connector is a conductive metal, such as copper, or is an alloy containing a conductive metal, such as copper.

In some embodiments of the present disclosure, the shape of the cross section of the first through hole 102 is a rectangle, which matches the shape of the electrical connector 5, such that the electrical connector 5 can pass through.

In some embodiments of the present disclosure, the shape of the cross section of the second through hole 302 is a rectangle, which matches the shape of the electrical connector 5, such that the electrical connector 5 can pass through the second through hole 302.

In some embodiments of the present disclosure, the electrical connector 5 is abutted against the side wall of the first through hole 102.

It is understood that by being abutted against the side wall of the first through hole 102, the electrical connector 5 can generate a pressure, and the direction of the pressure is perpendicular to the side wall of the first through hole 102. In the case that the electrical connector 5 has a tendency to move relative to the first through hole 102, the pressure can create a frictional force, thereby restricting movement of the electrical connector 5 relative to the first through hole 102. In this way, the sealing stability of the electrical connector 5 is improved.

In some embodiments of the present disclosure, the electrical connector 5 is be deformed in the first through hole 102 based on its own structural characteristic, such that a pressure abutting against the side wall of the first through hole 102 is generated. The electrical connector 5 generates, by cooperating with another sealing element, the pressure abutting against the side wall of the first through hole 102.

In some embodiments of the present disclosure, the sealing structure includes an elastic member 6, wherein the elastic member 6 is sleeved on the electrical connector 5 and is abutted against the electrical connector 5 and the side wall of the first through hole 102.

It is understood that the elastic member 6 is abutted against the electrical connector 5 and the side wall of the first through hole 102 via deformation, such that the electrical connector 5 is abutted against the side wall of the first through hole 102. Moreover, the elastic member 6 also facilitates increasing the coefficient of friction between the electrical connector 5 and the side wall of the first through hole 102, thereby increasing the stability of the electrical connector 5 being in the first through hole 102.

Secondly, in the case that the first housing 1 is assembled with the second housing 3, because the first through hole 102 and the second through hole 302 are disposed opposite each other, when the electrical connector 5 extends into the first through hole 102, the elastic members 6 can be pressed simultaneously to enter the first through hole 102, and abutting against the electrical connector 5 and the side wall of the first through hole 102. Due to movement of the first housing 1 relative to the second housing 3 during assembly, the elastic member 6 and the electrical connector 5 seal the first through hole 102 simultaneously, such that the assembly efficiency is improved.

In some embodiments of the present disclosure, the elastic member 6 is a sealing ring.

In some embodiments of the present disclosure, a material of the elastic member 6 is rubber.

In some embodiments of the present disclosure, the electrical connector 5 includes a sealing portion 51. The orthographic projection of the second through hole 302 on a second projection plane is within an orthographic projection of the sealing portion 51 on the second projection plane. The second projection plane is a plane perpendicular to the height direction of the second housing 3, and the sealing portion 51 is abutted against the second housing 3 and forms the first sealing surface.

It is understood that as the orthographic projection of the second through hole 302 on the second projection plane is within the orthographic projection of the sealing portion 51 on the second projection plane, the annular first sealing surface can be formed at one end of the second through hole 302. Moreover, the sealing effect of the first sealing surface is improved by applying a pressure to the sealing portion 51, and the sealing portion 51 can support a portion of the electrical connector 5 in the first through hole 102 and a portion thereof in the first cavity 101. In this way, in the case that the first housing 1 is assembled with the second housing 3, the stability of the electrical connector 5 is improved.

In some embodiments of the present disclosure, the annular first sealing surface indicates a surface on which the sealing portion 51 is in contact with the second housing 3 and a surface on which the second housing 3 is in contact with the sealing portion 51. One end of the second through hole 302 is sealed due to abutting between the surface on which the sealing portion 51 is in contact with the second housing 3 and the surface on which the second housing 3 is in contact with the sealing portion 51. Alternatively, a sealing member is filled between the surface on which the sealing portion 51 is in contact with the second housing 3 and the surface on which the second housing 3 is in contact with the sealing portion 51, thereby improving the sealing performance.

In some embodiments of the present disclosure, abutting between the sealing portion 51 and the second housing 3 is achieved via welding, bolting, or the like.

In some embodiments of the present disclosure, the sealing structure further includes a plurality of abutment members 7, wherein the plurality of abutment members 7 are circumferentially disposed at intervals around the second through hole 302. Each of the plurality of abutment member 7 is connected to the sealing portion 51 and the second housing 3, such a pressure perpendicular to the first sealing surface is applied on the sealing portion.

It is understood that the abutment member 7 generates a pressure perpendicular to the first sealing surface, wherein the pressure can improve the tightness of contact between the sealing portion 51 and the second housing 3. Because the first sealing surface is formed between the sealing portion 51 and the second housing 3 that are in tight contact with each other, the sealing effect can be improved, thereby reducing impurities from entering the second cavity 301 through the second through hole 302. The plurality of abutment members 7 are circumferentially disposed at intervals around the second through hole 302, the pressures applied by the abutment members 7 can be circumferentially distributed around the second through hole 302. Therefore, the sealing performance at a plurality of positions of the first sealing surface can be improved, thereby improving the sealing effect.

In some embodiments of the present disclosure, the sealing portion 51 has a through hole, the second housing 3 has a threaded hole, the abutment member 7 is in threaded connection with the threaded hole through the through hole, and a pressure generated in the threaded connection presses the sealing portion 51 against the second housing 3, such that sealing is achieved.

In some embodiments of the present disclosure, the abutment member 7 abuts against the second housing 3 via welding or the like.

In some embodiments of the present disclosure, the first housing 1 is disposed above the second housing 3, and the sealing portion 51 is disposed between the first housing 1 and the second housing 3.

In some embodiments of the present disclosure, the sealing structure further include a plurality of connectors 8, wherein the plurality of connectors 8 are circumferentially disposed at intervals around the electrical connector 5, the connector 8 connects the first housing 1 to the second housing 3, such that a second sealing surface is formed between the first housing 1 and the second housing 3, and the second sealing surface circumferentially extends around the first sealing surface.

It is understood that the first housing lis connected to the second housing 3 via the connector 8, which is advantageous to completing the assembly of the first housing 1 and the second housing 3. The second sealing surface circumferentially extends around the first sealing surface, which is advantageous to realizing the sealing function of the sealing portion 51 of the electrical connector 5 between the first housing 1 and the second housing 3, thereby reducing performance degradation caused by contamination to the sealing portion 51.

In some embodiments of the present disclosure, the electrical connector 5 includes a first connecting portion 52 and a second connecting portion 53, the sealing portion 51 is connected to the first connecting portion 52 and the second connecting portion 53, the first connecting portion 52 passes through the first through hole 102 and extends into the first cavity 101, the second connecting portion 53 passes through the second through hole 302 and extends into the second cavity 301, and the sealing portion 51 is disposed between the first housing 1 and the second housing 3.

It is understood that the first connecting portion 52 can implement electrical connection with the controller 2, and the second connecting portion 53 can implement electrical connection with the motor 4. The first connecting portion 52 can transmit an electrical signal to the second connecting portion 53 through the sealing portion 51. In this way, control of the motor 4 by the controller 2 can be achieved.

In some embodiments of the present disclosure, the second connecting portion 53 and the motor 4 is connected by a bolt to achieve electrical connection.

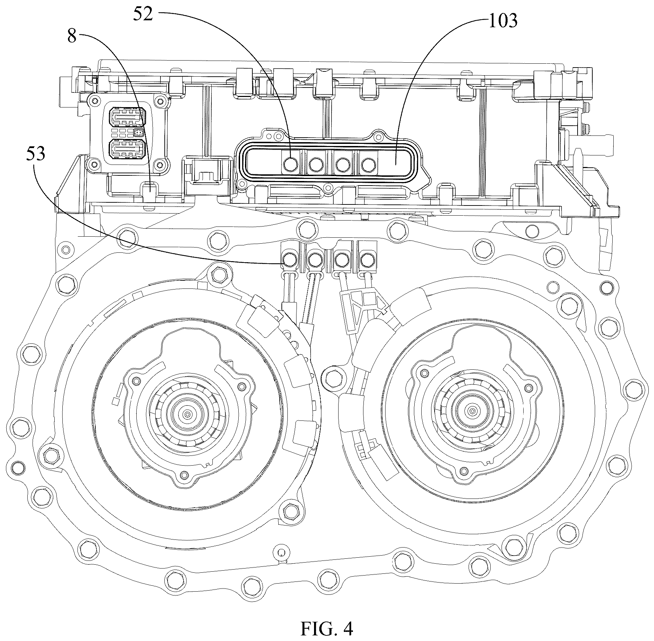

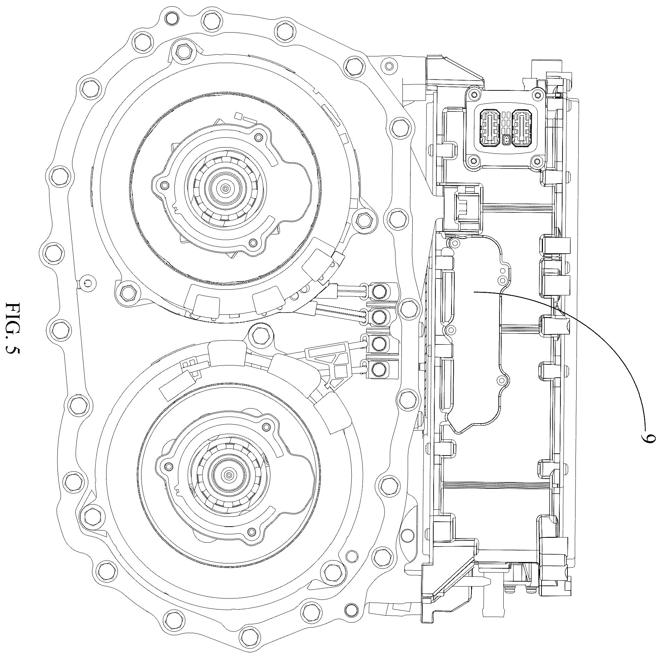

In some embodiments of the present disclosure, as shown in FIG. 4 and FIG. 5, the first housing 1 has an opening 103, the sealing structure includes a cover plate 9, the opening 103 is on an adjacent side of the first through hole 102, an orthographic projection of the opening 103 on a third projection plane partially overlaps with an orthographic projection of the first connecting portion 52 on the third projection plane, the third projection plane is a projection plane perpendicular to the width direction of the first housing 1, and the cover plate 9 seals the opening 103. This is advantageous to an assembler in connecting the first connecting portion 52 to the controller 2 through the opening 103.

Optionally, the first connecting portion 52 and the controller 2 are connected by a bolt.

Optionally, the cover plate 9 and the first housing 1 are connected by a bolt, such that sealing of the opening 103 by the cover plate 9 can be achieved.

In some embodiments of the present disclosure, a clearance fit is formed between the second connecting portion 53 and the second through hole 302, which is beneficial for assembling the electrical connector 5 to the second housing 3.

In some embodiments of the present disclosure, there are two, three, four, or another quantity of first connecting portions 52, and each first connecting portion 52 functions to transmit an electrical signal.

In some embodiments of the present disclosure, there are two, three, four, or another quantity of second connecting portions 53, and each second connecting portion 53 functions to transmit an electrical signal.

In some embodiments of the present disclosure, the second housing 3 has a third cavity 303. The third cavity 303 is communicated with the second cavity 301, and the second through hole 302 and the third cavity 303 are on adjacent sides of the second cavity 301.

It is understood that the motor 4 is configured to drive a transmission mechanism to realize power transmission. The third cavity 303 is communicated with the second cavity 301, which is advantageous for placing the transmission mechanism in the third cavity 303 and establishing transmission connection with the motor 4. The second through hole 302 and the third cavity 303 being on adjacent sides of the second cavity 301 is advantageous to reducing interference between the electrical connector 5 and the transmission mechanism during assembly.

According to a second aspect of the present disclosure, a gearbox is provided. The gearbox includes the sealing structure according to the above embodiments.

It is understood that by using the sealing structure according to the above embodiments, the gearbox of the present disclosure has the same technical effects as those in the above embodiments. Details are not described herein again.

According to a third aspect of the present disclosure, an automobile is provided. The automobile includes the gearbox according to the above embodiments.

It is understood that based on the gearbox according to the above embodiments, the automobile of the present disclosure has the same technical effects as those in the above embodiments. Details are not described herein again.

In some embodiments of the present disclosure, the automobile is a battery electric vehicle or a hybrid electric vehicle.

A person of ordinary skill in the art understands that all or some of the processes for implementing the above embodiments are completed by hardware, or are completed by instructing related hardware through a program. The program is stored in a computer-readable storage medium. The above storage medium is a read-only memory, a magnetic disk, a compact disc, or the like.

The above descriptions are merely preferred embodiments of the present disclosure, but are not intended to limit the present disclosure. Any modifications, equivalent replacements, improvements, and the like made without departing from the spirit and principle of the present disclosure shall fall within the protection scope of the present disclosure.

## Claims

1. A sealing structure, comprising: a first housing (1), a controller (2), a second housing (3), a motor (4), and an electrical connector (5), wherein the first housing (1) has a first cavity (101) and a first through hole (102), and the second housing (3) has a second cavity (301) and a second through hole (302);
wherein the motor (4) is disposed in the first cavity (101);
the controller (2) is disposed in the second cavity (301);
the first housing (1) is connected to the second housing (3);
one end of the first through hole (102) is disposed opposite one end of the second through hole (302);
the motor (4) is electrically connected to the controller (2) via the electrical connector (5), and the electrical connector (5) extends from the first cavity (101) through the first through hole (102) and the second through hole (302) into the second cavity (301);
the electrical connector (5) seals the first through hole (102); and
an annular first sealing surface is formed between the electrical connector (5) and the second housing (3), and the first sealing surface extends circumferentially around the second through hole (302) towards one end of the first through hole (102).

2. The sealing structure according to claim 1, wherein the electrical connector (5) is abutted against a side surface of the first through hole (102).

3. The sealing structure according to claim 2, comprising an elastic member (6), wherein the elastic member (6) is sleeved on the electrical connector (5) and is abutted against both the electrical connector (5) and the side wall of the first through hole (102).

4. The sealing structure according to any one of claims 1 to 3, wherein the electrical connector (5) comprises a sealing portion (51), an orthographic projection of the second through hole (302) on a second projection plane is within an orthographic projection of the sealing portion (51) on the second projection plane, the second projection plane is perpendicular to a height direction of the second housing (3), and the sealing portion (51) is abutted against the second housing (3) and forms the first sealing surface.

5. The sealing structure according to claim 4, further comprising a plurality of abutment members (7), wherein the plurality of abutment members (7) are circumferentially disposed at intervals around the second through hole (302), and each of the plurality of abutment members (7) is connected to the sealing portion (51) and the second housing (3), such that a pressure perpendicular to the first sealing surface is applied on the sealing portion (51).

6. The sealing structure according to claim 5, further comprising a plurality of connectors (8), wherein the plurality of connectors (8) are circumferentially disposed at intervals around the electrical connector (5), the first housing (1) is connected to the second housing (3) via the connector (8), such that a second sealing surface is formed between the first housing (1) and the second housing (3), and the second sealing surface circumferentially extends around the first sealing surface.

7. The sealing structure according to claim 4, wherein the electrical connector (5) comprises a first connecting portion (52) and a second connecting portion (53), the sealing portion (51) is connected to the first connecting portion (52) and the second connecting portion (53), the first connecting portion (52) passes through the first through hole (102) and extends into the first cavity (101), the second connecting portion (53) passes through the second through hole (302) and extends into the second cavity (301), and the sealing portion (51) is disposed between the first housing (1) and the second housing (3).

8. The sealing structure according to claim 1, wherein the second housing (3) has a third cavity (303), the third cavity (303) is communicated with the second cavity (301), and the second through hole (302) and the third cavity (303) are disposed on two adjacent sides of the second cavity (301) respectively.

9. A gearbox, comprising the sealing structure as defined in any one of claims 1 to 8.

10. An automobile, comprising the gearbox as defined in claim 9.
